# NEW EUROPEAN PATENT SPECIFICATION

(11) **EP 3 180 393 B2**
(45) Date of publication and mention of the opposition decision: **16.10.2024**
(45) Mention of the grant of the patent: 29.09.2021
(21) Application number: 15754082.4
(22) Date of filing: 12.08.2015
(51) Int. Cl.: C08J 5/18, C08J 9/12, C09K 21/00, C08L 63/00

(54) **FILM ADHESIVE**
FOLIENKLEBER
FILM ADHÉSIF

(30) Priority: 12.08.2014 US 201462036300 P
(43) Date of publication of application: 21.06.2017
(73) Proprietor: 3M Innovative Properties Company, St. Paul, MN 55133-3427 (US)
(72) Inventor: ELGIMIABI, Sohaib, D-41453 Neuss (DE); HARRISON, Peter J., Saint Paul, Minnesota 55133-3427 (US)
(74) Representative: Mathys & Squire
(86) International application number: PCT/US2015/044857
(87) International publication number: WO 2016/025597

(56) References cited:
- EP-A1- 2 700 683
- WO-A1-2007/025036
- US-A1- 2010 004 369

## Description

### Field of the Disclosure

This disclosure relates to curable compositions including room temperature liquid epoxy resin, epoxy curative, thermoplastic resin, and a physical blowing agent which are, in some embodiments, useful as core splice film adhesives.

### Field of the Disclosure

This disclosure relates to curable compositions including room temperature liquid epoxy resin, epoxy curative, thermoplastic resin, and a physical blowing agent which are, in some embodiments, useful as core splice film adhesives.

### Technical Background

Structural adhesive compositions in film format are known from bonding operations in industry, such as the automotive sector. For instance, EP 2700683 A1 discloses a structural adhesive film comprising a thermosettable composition, which comprises a) an epoxy compound having an average epoxy equivalent weight of less than 250 g/equivalent, b) a thermoplastic resin having a softening point comprised between 60°C and 140°C, c) an epoxy curing agent, and d) optionally, a toughening agent, wherein the weight ratio of said epoxy compound and said thermoplastic resin, and optionally the amount of said toughening agent are selected such as to provide said structural adhesive film with an elongation at break of at least 60% when measured according to tensile test DIN EN ISO 527.

### Summary of the Disclosure

Briefly, the present disclosure provides a curable composition according to claim 1.

In some embodiments, the curable composition contains 40-60 wt% of the room temperature liquid epoxy resin. In some embodiments, the thermoplastic resin has a softening point of between 60 °C and 150 °C, as measured by DIN EN ISO 306 method A50. The thermoplastic resin is a polymer comprising phenylene oxide (-Ph-O-) units in its polymer backbone. In some embodiments, the thermoplastic resin is a copolymer of bisphenol a and epichlorhydrin. In some embodiments, the thermoplastic resin is a polyethersulfone. In some embodiments, the curable composition contains 16-25 wt% of the thermoplastic resin. In some embodiments, the curable composition comprises 10-20 wt% flame retardants. In some embodiments, the curable composition comprises greater than 5 wt% of an intu-mescent graphite flame retardant and greater than 7 wt% of a red phosphorus flame retardant. In some embodiments, the curable composition demonstrates expansion upon cure of greater than 250%. In some embodiments, the curable composition cures to a composition that is fire retardant. In some embodiments, the curable composition contains no blowing agent other than a physical blowing agent.

In another aspect, the present disclosure provides a film of the curable composition of the present disclosure. In some embodiments, the film has a thickness of less than 2 mm.

In another aspect, the present disclosure provides a cured composition obtained by curing the curable composition of the present disclosure. In some embodiments, the cured composition is fire retardant.

All scientific and technical terms used herein have meanings commonly used in the art unless otherwise specified.

As used in this specification and the appended claims, the singular forms "a", "an", and "the" encompass embodiments having plural referents, unless the content clearly dictates otherwise.

As used in this specification and the appended claims, the term "or" is generally employed in its sense including "and/or" unless the content clearly dictates otherwise.

As used herein, "have", "having", "include", "including", "comprise", "comprising" or the like are used in their open ended sense, and generally mean "including, but not limited to." It will be understood that the terms "consisting of" and "consisting essentially of" are subsumed in the term "comprising," and the like.

### Detailed Description

The present disclosure provides an adhesive composition. In some embodiments the adhesive composition is a heat-curable adhesive composition. In some embodiments the adhesive composition is an expandable heat-curable adhesive composition. In some embodiments, the adhesive composition is in the form of a film. In some embodiments, the adhesive composition is in the form of a tape. Typically such a film ortape has a thickness of greaterthan 0.01 mm, more typically greater than 0.1 mm, and more typically greater than 0.5 mm. Typically such a film ortape has a thickness of less than 20 mm, more typically less than 10 mm, and more typically less than 5 mm.

The adhesive composition according to the present disclosure comprises a composition according to claim 1.

Any suitable room temperature liquid epoxy resin may be used in the composition of the present disclosure. In some embodiments, the liquid epoxy resin is a neat room temperature liquid epoxy resin, i.e., is a liquid at room temperature without addition of solvents or reactive diluents. Suitable room temperature liquid epoxy resins for use as a neat room temperature liquid epoxy resin may include bisphenol-A polyepoxide resins such as EPON 828 (Momentive Specialty Chemicals, Columbus, Ohio); D.E.R 331 (Dow Chemical Company, Midland, Michigan); bisphenol-A/F polyepoxide resins such as EPON 232 (Momentive Specialty Chemicals, Columbus, Ohio). Suitable epoxy/diluent combinations for use as epoxy/reactive diluent room temperature liquid epoxy resin may include epoxy novolac resins such as D.E.N. 438 (Dow Chemical Company, Midland, Michigan) combined with 1,4-Cyclohexandimethanoldiglycidylether; D.E.N. 431, D.E.N. 425 (Dow Chemical Company, Midland, Michigan), Epalloy 9000, Epalloy 8350 (CVC thermoset specialties, Moorestown, New Jersey).

In some embodiments, the adhesive composition comprises greater than 35 wt% room temperature liquid epoxy resin, in some embodiments greater than 40 wt% room temperature liquid epoxy resin, and in some embodiments greater than 45 wt% room temperature liquid epoxy resin. In some embodiments, the adhesive composition comprises less than 75 wt% room temperature liquid epoxy resin, in some embodiments less than 70 wt% room temperature liquid epoxy resin, in some embodiments less than 65 wt% room temperature liquid epoxy resin, in some embodiments less than 50 wt% room temperature liquid epoxy resin, and in some embodiments less than 55 wt% room temperature liquid epoxy resin.

Any suitable thermoplastic resin may be used in the composition of the present disclosure. Typically, the thermoplastic resin has a softening point of between 60 °C and 150 °C, as measured by DIN EN ISO 306 method A50. In some embodiments, the thermoplastic resin has a softening point of less than 150 °C, in some embodiments less than 135 °C, in some embodiments less than 120 °C, in some embodiments less than 105 °C, and in some embodiments less than 95 °C. In some embodiments, the thermoplastic resin has a softening point of greater than 60 °C, in some embodiments greater than 70 °C, and in some embodiments greater than 80 °C. The thermoplastic resin is a polymer comprising phenylene oxide (-Ph-O-) units in its polymer backbone. In some embodiments, the thermoplastic resin is a phenoxy resin. In some embodiments, the thermoplastic resin is a copolymer of bisphenol a and epichlorhydrin. In some embodiments the thermoplastic resin is a polyethersulfone.

In some embodiments, the adhesive composition comprises greater than 10 wt% thermoplastic resin, in some embodiments greater than 16 wt% thermoplastic resin, and in some embodiments greater than 18 wt% thermoplastic resin. In some embodiments, the adhesive composition comprises less than 35 wt% thermoplastic resin, in some embodiments less than 30 wt% thermoplastic resin, and in some embodiments less than 25 wt% thermoplastic resin.

Any suitable physical blowing agent may be used in the composition of the present disclosure. In some embodiments, the adhesive composition contains no blowing agents other than physical blowing agents, so that the resulting thermoexpanded foam is a closed cell foam. Suitable physical blowing agents may include thermoexpandable microcapsules such as those obtainable under the trade designation MICROPEARL F48D (Lehmann & Voss & Co. KG, Hamburg, Germany); MICROPEARL F30 (Lehmann & Voss & Co. KG, Hamburg, Germany) or EXPANCEL (AkzoNobel, Sundsvall, Sweden).

In some embodiments, the adhesive composition comprises greater than 0.6 wt% physical blowing agent, in some embodiments greater than 1 wt% physical blowing agent, in some embodiments greater than 1.5 wt% physical blowing agent, and in some embodiments greater than 5 wt% physical blowing agent. In some embodiments, the adhesive composition comprises less than 8 wt% physical blowing agent, in some embodiments less than 5 wt% physical blowing agent, and in some embodiments less than 2 wt% physical blowing agent.

Any suitable epoxy curative may be used. Typically a heat activated curative is used. Suitable curatives may include dicyandiamide curing agents; polyamine curing agents, acid anhydride curing agents, guanidine curing agents, mercaptan curing agents and phenol curing agents. Most typically the curative is a dicyandiamide curing agent.

In some embodiments, the composition additionally comprises 0.5-10 wt% of an epoxy cure accelerator. Any suitable cure accelerator may be used. Suitable cure accelerators may include aromatic substituted ureas; aliphatic and aromatic tertiary amines such as dimethylaminopropylamine; pyridine; boron complexes, including boron complexes with monoethanolamine; and imidazoles such as 2-ethyl-methylimidazole. Most typically a urea cure accelerator is used.

The composition comprises 0.5-25 wt% flame retardant additives. In some embodiments, the composition additionally comprises intumescent flame retardant additives. Any suitable intumescent flame retardant additives may be used. Suitable intumescent flame retardant additives may include intumescent graphite flame retardants such as BLAHGRAPHIT 0185 (Alroko GmbH & Co., KG, Hamburg, Germany) or Ammonium polyphosphate compounds such as INTUMAX AC-2 (Broadview Technologies Inc, Newark, NJ). In some embodiments, the composition additionally comprises red phosphorus flame retardant additives. Any suitable phosphorus based flame retardant additives may be used. Suitable phosphorus flame retardant additives may include EXOLIT RP 6500, EXOLIT OP 930, EXOLIT OP 935, or EXOLIT 1230 (Clariant International, Ltd., CH-4132 Muttenz, Switzerland). In some embodiments, the composition additionally comprises both an intumescent graphite flame retardant and a red phosphorus flame retardant.

In some embodiments, the adhesive composition comprises greater than 5 wt% flame retardant additives, in some embodiments greater than 10 wt% flame retardant additives, and in some embodiments greater than 15 wt% flame retardant additives. In some embodiments, the adhesive composition comprises less than 20 wt% flame retardant additives. In some embodiments, the adhesive composition comprises greater than 5 wt% of an intumescent graphite flame retardant and greater than 5 wt% of a red phosphorus flame retardant. In some embodiments, the adhesive composition comprises greater than 5 wt% of an intumescent graphite flame retardant and greater than 7 wt% of a red phosphorus flame retardant. In some embodiments, the adhesive composition comprises greater than 7 wt% of an intumescent graphite flame retardant and greater than 7 wt% of a red phosphorus flame retardant. In some embodiments, the adhesive composition comprises greater than 7 wt% of an intumescent graphite flame retardant and greater than 9 wt% of a red phosphorus flame retardant.

In some embodiments, the composition additionally comprises one or more pigments. In some embodiments, the composition additionally comprises one or more toughening agents. In some embodiments, the composition additionally comprises one or more fillers. In some embodiments, the composition additionally comprises one or more rheology modifiers. In some embodiments, the composition additionally comprises one or more mineral particles. In some embodiments, the mineral particles are alumina. In some embodiments, the mineral particles are silica. In some embodiments, the mineral particles are calcite. In some embodiments, the composition additionally comprises one or more hollow microspheres. In some embodiments, the hollow microspheres are glass. In some embodiments, the hollow microspheres are polymeric. In some embodiments, the composition additionally comprises one or more fibers.

The adhesive composition according to the present disclosure may be made by any suitable method. In one method, less thermally sensitive components are first combined at elevated temperatures, such as the liquid epoxy resin, the thermoplastic resin, toughening agents, fillers, pigments, and flame retardant additives. The temperature is then reduced and more thermally sensitive components are added, such as curing agents, accelerators, and blowing agents. In some embodiments, the composition is then formed into a film.

The present disclosure also provides cured compositions resulting from cure of each of the curable compositions presented herein. In some embodiments, the cured compositions are thermocured. In some embodiments, the cured compositions are thermocured and thermoexpanded. In some embodiments, expansion upon cure (as measured according to AECMA Standard EN 2667-3) is greater than 150%, in some embodiments greater than 200%, in some embodiments greater than 250%, and in some embodiments greater than 300%.

In some embodiments the cured composition according to the present disclosure is fire retardant. In some embodiments the cured composition according to the present disclosure is fire retardant to the extent that it passes Federal Aviation Regulation (FAR) test method 25.856.

Objects and advantages of this disclosure are further illustrated by the following examples, but the particular materials and amounts thereof recited in these examples, as well as other conditions and details, should not be construed to unduly limit this disclosure.

### Examples

The following abbreviations are used to describe the examples:
- °C:: degrees Centigrade
- °C/min:: degrees Centigrade per minute
- °F:: degrees Fahrenheit
- °F/min:: degrees Fahrenheit per minute
- cm:: centimeter
- g/cm³: grams per cubic centimeter
- mg:: milligram
- mil:: 10⁻³ inch
- mm:: millimeter
- MPa:: megaPascals

Unless stated otherwise, all other reagents were obtained, or are available from fine chemical vendors such as Sigma-Aldrich Company, St. Louis, Missouri, or may be synthesized by known methods. Unless otherwise reported, all ratios are by weight.

Abbreviations for reagents used in the examples are as follows:

| | |
|---|---|
| BG-185: | An intumescent graphite flame retardant, obtained under the trade designation "BLAHGRAPHIT 0185" from Alroko GmbH & Co., KG, Hamburg, Germany. |
| CG-1200: | A micronized grade of dicyandiamide curing agent, obtained under the trade designation "AMICURE CG 1200" from Air Products & Chemicals, Inc., Allentown, Pennsylvania. |
| DEN-438: | An epoxy novolac resin, obtained under the trade designation "D.E.N. 438" from Dow Chemical Company, Midland, Michigan. |
| E-2020P: | A polyethersulphone resin, obtained under the trade designation "ULTRASON E 2020 P" from BASF Corp., Ludwigshafen am Rhein, Germany. |
| E-757: | 1,4-Cyclohexandimethanoldiglycidylether, obtained under the trade designation "EPODIL 757" from Air Products and Chemicals Inc. A reactive diluent. |
| EPON-828: | A bisphenol-A polyepoxide resin having an approximate epoxy equivalent weight of 188 grams/equivalent, available under the trade designation "EPON 828", from Momentive Specialty Chemicals, Columbus, Ohio. A neat room-temperature liquid epoxy resin. |
| F-48D: | A thermoexpandable microcapsule produced by encapsulating volatile hydrocarbon with acrylic copolymer, obtained under the trade designation "MICROPEARL F48D" from Lehmann & Voss & Co. KG, Hamburg, Germany. |
| KBA: | A blue pigment, obtained under the trade designation "KEYPLAST BLUE A" from Keystone Aniline Corporation, Chicago, Illinois. |
| M-120: | A carbon black pigment, obtained under the trade designation "MONARCH 120" from Cabot Corporation, Boston, Massachusetts. |
| M-521: | A methylmethacrylate/butadiene/styrene copolymer, obtained under the trade designation "KANE ACE M521" from Kaneka America Holdings, Inc., Pasadena, Texas. |
| P-2650A: | A core-shell toughening agent based on butadiene rubber, obtained under the trade designation "PARALOID EXL 2650A" from Dow Chemical Company. |
| PKHP-200: | A micronized phenoxy resin, obtained under the trade designation "INCHEMREZ PKHP-200" from InChem Corporation, Rock Hill, South Carolina. |
| R-202: | A surface modified fumed silica, obtained under the trade designation "AEROSIL R202" from Evonik Industries, AG, Essen, Germany. |
| R-816: | A surface modified fumed silica, obtained under the trade designation "AEROSIL R 816" from Evonik Industries, AG. |
| RP-6500: | A blend of stabilized, micro encapsulated red phosphorus in an epoxy resin carrier, obtained under the trade designation "EXOLIT RP 6500" from Clariant International, Ltd., CH-4132 Muttenz, Switzerland. |
| U-52M: | A micronized grade of an aromatic substituted urea, obtained under the trade designation "OMICURE U52M" from CVC Thermoset Specialties, Moorestown, New Jersey. |
| Z-6040: | Glycidoxypropyltrimethoxysilane, obtained under the trade designation "Z-6040" from Dow Corning Corporation, Midland, Michigan. |

### Example 1

The first step is combining at elevated temperature (130°C): liquid epoxy resins, thermoplastic resin, toughening agents. In Example 1, 49.0 grams Epon 828, 23.6 grams PKHP-200 and 12.5 grams P2650A were combined in a mixing cup, type "MAX 100", obtained from Flacktek, Inc., Landrum, South Carolina. The cup was heated to 120°C in an oven, then homogeneously dispersed at 3,000 rpm for 2 minutes using a model "DAC 150 FVZ SPEEDMIXER" obtained from Hauschild Engineering & Co., KG, Hamm, Germany. The mixture was then transferred to an oven at 130°C and held for one hour, after which it was returned to the mixer, 2.0 grams of Z-6040 were added and mixed at 3,000 rpm for 2 minutes until homogeneous.

The second step is addition of inorganic fillers. In Example 1, 1.0 grams R-816 were then added and mixing continued for another 2 minutes until fully dispersed.

The third step is addition of curing agents, accelerators, and blowing agents at a reduced temperature, no more than 70°C. In Example 1, the mixture was then cooled to between 60-70°C, and 2.6 grams CG1200, 1.3 grams U52M, 7.8 grams F48D and 0.2 grams M-120 were added sequentially in 2 minute intervals and mixed until homogeneous.

The fourth step is film formation. In Example 1, the mixture was then manually formed into a 1.2 mm film by means of a knife coater between two polyester release liners and cooled to 21°C.

### Examples 2-5.

The procedure generally described in Example 1 was repeated, wherein the compositions were modified according to weight percentages listed in Table 1.

Where DEN-438 and E-757 are a part of the composition, i.e., in Examples 3-5, these two components were mixed together (using a pneumatic mixer in a pail) to create a room temperature liquid epoxy prior to their use.

**TABLE 1**

| Component | Weight % | | | | |
|---|---|---|---|---|---|
| | Example 1 | Example 2 | Example 3 | Example 4 | Example 5 |
| BG-185 | 0 | 0 | 0 | 0 | 7.4 |
| CG-1200 | 2.6 | 2.6 | 4.4 | 4.0 | 3.9 |
| DEN-438 | 0 | 0 | 30.7 | 28.2 | 28.5 |
| E-2020P | 0 | 10.0 | 0 | 0 | 0 |
| E-757 | 0 | 0 | 4.4 | 4.0 | 4.1 |
| EPON-828 | 49.0 | 49.0 | 30.7 | 28.2 | 19.2 |
| F-48D | 7.8 | 7.8 | 2.0 | 2.2 | 1.8 |
| M-120 | 0.2 | 0.2 | 0 | 0 | 0 |
| M-521 | 0 | 0 | 0 | 10.0 | 0 |
| P-2650A | 12.5 | 26.1 | 0 | 0 | 0 |
| KBA | 0 | 0 | 0.02 | 0.02 | 0.1 |
| PKHP-200 | 23.6 | 0 | 22.0 | 20.1 | 20.3 |
| R-202 | 0 | 0 | 3.9 | 1.5 | 3.7 |
| R-816 | 1.0 | 1.0 | 0 | 0 | 0 |
| RP-6500 | 0 | 0 | 0 | 0 | 9.2 |
| U-52M | 1.3 | 1.3 | 1.88 | 1.78 | 1.8 |
| Z-6040 | 2.0 | 2.0 | 0 | 0 | 0 |

### Evaluations

The above examples were evaluated as follows, against a Comparative material obtained under the trade designation "SCOTCH-WELD STRUCTURAL CORE SPLICE ADHESIVE FILM AF-3024" from 3M Company. Results are listed in Table 2. This film includes solid and liquid epoxy, epoxy curative, nitrile rubber, chemical foaming agent (resulting on open cell structure) and no thermoplastic resin.

### Tube Shear Strength

Samples were measured for Tube Shear Strength according to AECMA (Association of European Aircraft and Component Manufacturers) Standard EN 2667-2. The cure cycle heating rate was 3°C/min, from 70°F (21.1°C) to 250°F (121.1°C), with a temperature hold of 90 minutes at 250°F (121.1°C). Results are reported in MPa.

### Expansion Ratio

Samples were measured for expansion range according to AECMA Standard EN 2667-3. The cure temperatures was 250°F (121.1°C) for 60 minutes, at a rate of 5°F/min (2.8°C/min). Results are reported as a percentage change over the original thickness.

### Sag

An 8 by 8 inch by 20 mil (20.32 by 20.32 cm by 0.51 mm) 2024 aluminum panel was scored 6 inches (15.24 cm) across the panel. The panel was cleaned with isopropyl alcohol, dried, and a 1 by 2 inch (2.54 by 5.08 cm) test sample, orientated with the 2 inch (5.08 cm) length aligned with the scored line, laminated to the panel. The panel was then placed vertically in an oven, and the temperature increased to 250°F (121.1°C) at to 250F at a rate of 5°F/min (2.8°C/min), held for 60 min, then removed from the oven. After the sample cooled to 70°F (21.1°C), the distance the material flowed beyond the score line was measured.

### Shelf Life

Samples were removed from storage at 0°F (-17.8°C), held at 70°F (21.1°C), and expansion ratio tests performed on a regular basis. The length of time before a noticeable change in the expansion ratio became evident was recorded.

### Vertical Flame Test

Example 5, formulated to meet fire retardant requirements, passed Federal Aviation Regulation (FAR) test method 25.856.

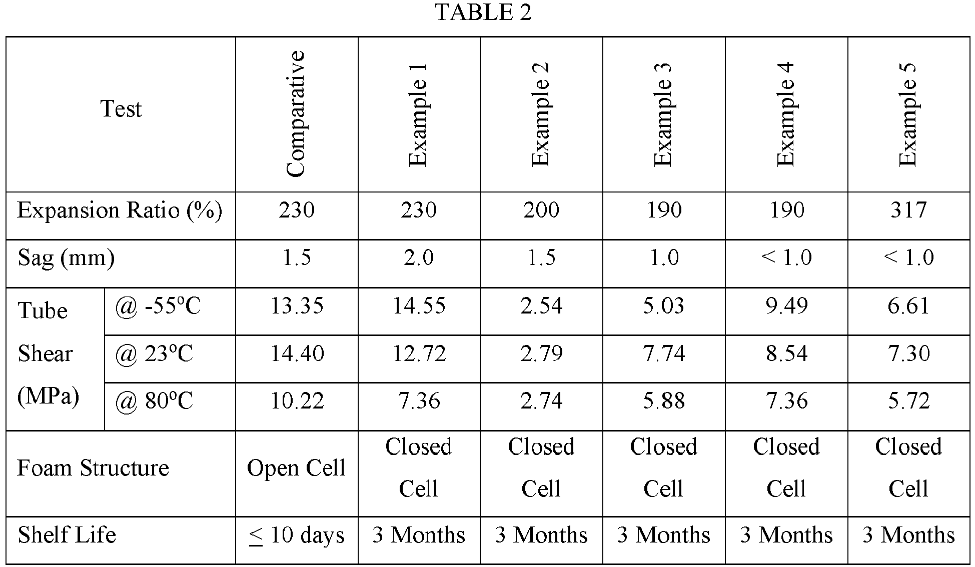

Various modifications and alterations of this disclosure will become apparent to those skilled in the art without departing from the scope of this disclosure, and it should be understood that this disclosure is not to be unduly limited to the illustrative embodiments set forth hereinabove.

## Claims

1. A curable composition comprising:
a) 30-80 wt% of a room temperature liquid epoxy resin;
b) 0.5-10 wt% of an epoxy curative;
c) 5-40 wt% of a thermoplastic resin;
d) 0.5-10 wt% of a physical blowing agent; and
e) 0.5-25 wt.% of flame retardant additives;
wherein the curable composition comprises a mixture of a neat room temperature liquid epoxy resin and an epoxy/reactive diluent room temperature liquid epoxy resin;
wherein the epoxy/reactive diluent room temperature liquid epoxy resin is an epoxy resin mixed with a reactive diluent such that it is a liquid at room temperature; and
wherein the thermoplastic resin is a polymer comprising phenylene oxide (-Ph-O-) units in its polymer backbone.

2. The curable composition according to any of the preceding claims containing no epoxy resin other than room temperature liquid epoxy resin.

3. The curable composition according to any of the preceding claims containing 40-60 wt% of the room temperature liquid epoxy resin.

4. The curable composition according to any of the preceding claims wherein the thermoplastic resin has a softening point of between 60°C and 150°C, as measured by DIN EN ISO 306 method A50.

5. The curable composition according to any of the preceding claims wherein the thermoplastic resin is a copolymer of bisphenol a and epichlorhydrin.

6. The curable composition according to any of the preceding claims wherein the thermoplastic resin is a polyethersulfone.

7. The curable composition according to any of the preceding claims containing 16-25 wt% of the thermoplastic resin.

8. The curable composition according to any of the preceding claims comprising 10-20 wt% flame retardants.

9. The curable composition according to any of the preceding claims comprising greater than 5 wt% of an intumescent graphite flame retardant and greater than 7 wt% of a red phosphorus flame retardant.

10. The curable composition according to any of the preceding claims which cures to a composition that is fire retardant.

11. The curable composition according to any of the preceding claims containing no blowing agent other than a physical blowing agent.

12. A cured composition obtained by curing the curable composition of any of claims 1-11.

## Patentansprüche

1. Eine härtbare Zusammensetzung, umfassend:
a) zu 30 bis 80 Gew.-% ein bei Raumtemperatur flüssiges Epoxidharz;
b) zu 0,5 bis 10 Gew.-% ein Epoxidhärtungsmittel;
c) zu 5 bis 40 Gew.-% ein thermoplastisches Harz;
d) zu 0,5 bis 10 Gew.-% ein physikalisches Treibmittel; und
e) zu 0,5 bis 25 Gew.-% flammhemmende Zusatzstoffe;
wobei die härtbare Zusammensetzung eine Mischung aus einem unverdünnten, bei Raumtemperatur flüssigen Epoxidharz und einem bei Raumtemperatur flüssigen Epoxidharz mit Epoxid/reaktivem Verdünnungsmittel umfasst;
wobei das bei Raumtemperatur flüssige Epoxidharz mit Epoxid/reaktivem Verdünnungsmittel ein Epoxidharz ist, das mit einem reaktiven Verdünnungsmittel derart gemischt ist, dass es bei Raumtemperatur eine Flüssigkeit ist; und
wobei das thermoplastische Harz ein Polymer ist, umfassend Phenylenoxid-(-Ph-O-)-Einheiten in seinem Polymergrundgerüst.

2. Die härtbare Zusammensetzung nach einem der vorstehenden Ansprüche, die außer bei Raumtemperatur flüssigem Epoxidharz kein Epoxidharz enthält.

3. Die härtbare Zusammensetzung nach einem der vorstehenden Ansprüche, die zu 40 bis 60 Gew.-% das bei Raumtemperatur flüssige Epoxidharz enthält.

4. Die härtbare Zusammensetzung nach einem der vorstehenden Ansprüche, wobei das thermoplastische Harz einen Erweichungspunkt zwischen 60 °C und 150 °C, gemessen nach DIN EN ISO 306, Verfahren A50, aufweist.

5. Die härtbare Zusammensetzung nach einem der vorstehenden Ansprüche, wobei das thermoplastische Harz ein Copolymer von Bisphenol A und Epichlorhydrin ist.

6. Die härtbare Zusammensetzung nach einem der vorstehenden Ansprüche, wobei das thermoplastische Harz ein Polyethersulfon ist.

7. Die härtbare Zusammensetzung nach einem der vorstehenden Ansprüche, die zu 16 bis 25 Gew.-% das thermoplastische Harz enthält.

8. Die härtbare Zusammensetzung nach einem der vorstehenden Ansprüche, umfassend zu 10 bis 20 Gew.-% Flammschutzmittel.

9. Die härtbare Zusammensetzung nach einem der vorstehenden Ansprüche, umfassend zu mehr als 5 Gew.-% ein intumeszierendes Graphit-Flammschutzmittel und zu mehr als 7 Gew.-% ein rotes Phosphor-Flammschutzmittel.

10. Die härtbare Zusammensetzung nach einem der vorstehenden Ansprüche, die zu einer Zusammensetzung härtet, die flammhemmend ist.

11. Die härtbare Zusammensetzung nach einem der vorstehenden Ansprüche, die außer einem physikalischen Treibmittel kein anderes Treibmittel enthält.

12. Eine gehärtete Zusammensetzung, die durch Härten der härtbaren Zusammensetzung nach einem der Ansprüche 1 bis 11 erhalten wird.

## Revendications

1. Composition durcissable comprenant :
a) de 30 à 80 % en poids d'une résine époxy liquide à température ambiante ;
b) de 0,5 à 10 % en poids d'un durcisseur d'époxy ;
c) de 5 à 40 % en poids d'une résine thermoplastique ;
d) de 0,5 à 10 % en poids d'un agent d'expansion physique ; et
e) de 0,5 à 25 % en poids d'additifs ignifugeants ;
dans laquelle la composition durcissable comprend un mélange de résine époxy liquide à température ambiante pure et d'une résine époxy liquide à température ambiante d'époxy/diluant réactif ;
dans laquelle la résine époxy liquide à température ambiante d'époxy/diluant réactif est une résine époxy mélangée à un diluant réactif de telle sorte qu'elle est un liquide à la température ambiante. et
dans laquelle la résine thermoplastique est un polymère comprenant des unités d'oxyde de phénylène (-Ph-O-) dans son squelette polymère.

2. Composition durcissable selon l'une quelconque des revendications précédentes, ne contenant aucune résine époxy autre que la résine époxy liquide à température ambiante.

3. Composition durcissable selon l'une quelconque des revendications précédentes, contenant de 40 à 60 % en poids de la résine époxy liquide à température ambiante.

4. Composition durcissable selon l'une quelconque des revendications précédentes, dans laquelle la résine thermoplastique a un point de ramollissement compris entre 60 °C et 150 °C, tel que mesuré par le procédé A50 de DIN EN ISO 306.

5. Composition durcissable selon l'une quelconque des revendications précédentes, dans laquelle la résine thermoplastique est un copolymère de bisphénol a et d'épichlorhydrine.

6. Composition durcissable selon l'une quelconque des revendications précédentes, dans laquelle la résine thermoplastique est une polyéthersulfone.

7. Composition durcissable selon l'une quelconque des revendications précédentes, contenant de 16 à 25 % en poids de la résine thermoplastique.

8. Composition durcissable selon l'une quelconque des revendications précédentes, comprenant de 10 à 20 % en poids d'ignifugeants.

9. Composition durcissable selon l'une quelconque des revendications précédentes, comprenant plus de 5 % en poids d'un ignifugeant de graphite intumescent et plus de 7 % en poids d'un ignifugeant de phosphore rouge.

10. Composition durcissable selon l'une quelconque des revendications précédentes, qui durcit en une composition qui est ignifugeante.

11. Composition durcissable selon l'une quelconque des revendications précédentes, ne contenant aucun agent d'expansion autre qu'un agent d'expansion physique.

12. Composition durcie obtenue par durcissement de la composition durcissable selon l'une quelconque des revendications 1 à 11.
